# EUROPEAN PATENT SPECIFICATION

(11) **EP 1 461 764 B1**
(45) Date of publication and mention of the grant of the patent: **07.01.2009**
(21) Application number: 02772376.6
(22) Date of filing: 14.10.2002
(51) Int. Cl.: G06K 11/06

(54) **DIGITISER STRUCTURES**
DIGITALISIERERSTRUKTUREN
STRUCTURES DE NUMERISEUR

(30) Priority: 21.12.2001 GB 0130580
(43) Date of publication of application: 29.09.2004
(73) Proprietor: MOTOROLA, INC., Schaumburg, IL 60196 (US); Motorola Limited, Basingstoke, Hampshire RG22 4PD (GB)
(72) Inventor: MARGALIT, Eli, 43401 Raanana (IL); BRAMI, Eyall, 67801 Matan (IL); MOSSERI, Yakov, 67431 Shoam (IL)
(74) Representative: McCormack, Derek James
(86) International application number: PCT/EP2002/011455
(87) International publication number: WO 2003/054780

(56) References cited:
- EP-A- 0 297 625
- EP-A- 0 793 132
- EP-A- 1 030 333
- EP-A- 1 147 882
- WO-A-00/79475
- US-A- 5 774 107
- US-A- 5 777 605
- US-B1- 6 266 032

## Description

### FIELD OF THE INVENTION

The present invention relates to digitiser structures and in particular transparent resistive digitiser devices for use in conjunction with display devices.

### BACKGROUND OF THE INVENTION

Combined display and digitiser devices are known for use in various applications especially as part of portable terminals for use in communication of data between a mobile user and a control terminal. The digitiser structure is transparent and often referred to as a 'tablet' which overlies the display and provides a pen driven input device for a computer, which may also form part of the portable terminal. For example, an input signal may be provided by a writing action of the pen in a position on the digitiser which correlates in position to an image shown on the display. The computer thereby receives a digital record of the position of the pen. Information written by the pen can thereby be recorded.

There are several different kinds of digitiser known and commercially available. The present invention is concerned with the so called resistive kind in which the electrical resistivity (conductivity) of a variable resistivity layer is altered (reduced) by the pressure exerted by the pen of the digitiser causing the resistivity to be reduced in a localised region adjacent to the position on the digitiser where the pen is applied. The variable resistivity layer may comprise an elastomer filled with conducting particles which are compressed together when the pen is applied. Typically, the load required to be exerted by the pen is 300 to 600 grammes.

The layer of variable resistivity material may be contained between conducting transparent layers, e.g. of tin oxide or indium-tin oxide, printed on thin,flexible transparent plastics layers. One of the flexible transparent plastics layers is often bonded to a transparent substrate made of clear plastics material. External electrodes connected to the conducting transparent layers are provided to allow the position on the digitiser at which the pen is applied to be detected. The currents developed between pairs of the electrodes are dependent on the length of the resistive path between the electrodes which length in turn depends on the position co-ordinates of the compressed region of the variable resistivity layer.

In use of a resistive digitiser, excessive pressure applied by the pen can cause excessive tension in the adjacent transparent conducting layer which can soon fail. Also, the plastics substrate is not ideal because it will generally have a poor optical quality and bending of the plastics substrate can cause bending of the layers which can lead to rupture of the transparent conducting layers and failure of the digitiser device.

WO:00/79475 describes a touch panel having an anolog resistance form with electrodes connected via a conducting adhesive.

US:5,774,107 describes a liquid crystal display with an input device comprising touch panel spacers overlapping the area other than pixels.

EP-A-793,132 describes a display device including a glass substrate on which a silicon dioxide passivating film is formed, the substrate being chemically toughened to allow scratches to be formed thereon.

These references do not disclose or suggest a digitiser having the structure of the present invention to be described herein.

### SUMMARY OF THE PRESENT INVENTION

According to the present invention there is provided a digitiser structure as claimed in claim 1 of the accompanying claims.

The glass substrate layer of the digitiser structure of the invention may be a layer which has been formed in a known manner by treating glass to form a thin skin layer in compression on its outer surfaces inside which is a core in tension. Such a treatment may be applied by immersing a hot layer of glass in a bath containing a molten potassium salt which allows sodium ions of the glass composition near the surface of the glass layer to be exchanged with potassium ions of the molten salt. In such a treatment the molten salt employed in the bath may for example comprise a mixture, e.g. a eutectic mixture, of potassium nitrate and sodium nitrate. The temperature of the molten salt in this case may for example be above 400°C, e.g in the range 400°C to 550°C. The compressive skin layer may have a thickness of from 20µm to 120 µm, especially from 25µm to 80µm depending on the treatment conditions. The base glass layer which is treated in this way is preferably a layer of float glass produced in a well known manner.

The substrate layer has a thickness which is in the range 0.5mm to 5mm, e.g especially 1mm to 1.5mm.

The bonding layer of the digitiser structure of the invention preferably comprises a material which is liquid when applied and sets by the action of photopolymerisation, e.g. using ultra violet radiation, to form a rigid solid layer. The material preferably has the following properties: (i) a low viscosity to avoid bubbles in formation of the bonding layer; and when set: (ii) a high transmissivity to visible light; (iii) a thermal expansion coefficient similar to that of the materials used in the substrate layer and the first and second optically transparent layers (e.g. thermoplastics material);(iv) a high strength and a low shear modulus;(v) lack of substantial degradation of properties even if the environmental temperature is high, e.g. in the range 30°C to 50°C or low, e.g. in the range 0°C to -40°C. Suitable bonding agents are uv cured optical adhesive products sold by Norland Products Inc. of Cranbury, New Jersey, USA.

The first and second optically transparent layers of the digitiser structure of the invention may be produced from thermoplastics materials as used in the art. For example:such layers may be made of polyethylene or PET (poly ethylene terephthalate). The thickness of such layers is 100µm to 300 µm, e.g. 190 µm.

The transparent conducting coatings may be formed on the first and second optically transparent layers in a conventional manner. For example, the coatings may be of n-type tin oxide or indium-tin oxide.

The variable resistivity layer may comprise a layer formed in a known manner of a compressible resilient elastomer whose thickness may be reduced by the action of pressure applied on one of the adjacent optically transparent, electrically conducting layers. The elastomer may be filled with a conducting particulate filler, e.g. of lightweight particles of a plastics material, coated with metallic coating material such as copper.

In the digitiser structure according to the invention the substrate layer provides high mechanical stiffness providing improved resistance against heavy writing loads thereby:avoiding excessive deflection and breakage of the transparent conducting coatings and provides improved protection against mechanical damage caused by accidental dropping or impact of another object on the digitiser. The use of the bonding layer avoids the need to print a conducting transparent layer directly on the glass surface which would lead to disadvantages.

The digitiser structure according to the invention may be used:as an overlay for an electro-optical display screen. Writing on the digitiser may be carried out in a known manner such as by use of a writing instument such as a dedicated pen, stylus or the like. External electrodes may be connected to the transparent conducting coatings in a known manner to enable electrical current signals to be produced which give a measure of the position on the digitiser where the writing is taking place. Signals recording the measured currents may be delivered to a signal processor, e.g in digital signal form.

The digitiser, and where included the display and signal processor, may be parts of a portable terminal for the radio communication of data, e.g for use by a postal courier:agency in the tracking of parcels and packages.

Embodiments of the present invention will now be described by way of example with reference to the accompanying drawings, in which:

### BRIEF DESCRIPTION OF THE ACCOMPANYING DRAWINGS

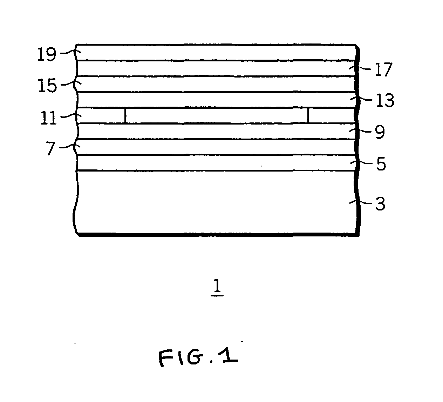

Figure 1 is an end sectional view of a digitiser structure embodying the invention.

### DESCRIPTION OF EMBODIMENTS OF THE INVENTION

As shown in Figure 1, a digitiser tablet 1 is formed of a multilayer transparent sandwich structure. A substrate 3 supports the other layers of the sandwich. The substrate 3 is typically 1.1 mm to 1.4 mm thick and is made of chemically toughened glass which has been treated as described earlier by a process in which sodium ions in the glass composition have been replaced by potassium ions to form a compressive outer skin. A first layer 7 of flexible transparent plastics material is bonded to the substrate 3 by a layer 5 of adhesive material comprising a UV photopolymerised clear adhesive such as the product sold under the trade name NORLAND 64 ^{™} or under the trade name NORLAND 73 ^{™}. The layer 7 carries on its surface which is not bonded by the layer 5 of adhesive a first transparent coating 9 of indium-tin oxide. A second layer 15 of flexible transparent plastics material carries on its surface facing the first transparent coating 9 a second transparent coating 13 of indium-tin oxide. The two coatings 9 and 13 are bonded together in their peripheral regions by an adhesive 11 forming an enclosure 10 in which there is contained a composition comprising a compressible, resilient elastomer containing a conducting particulate plastics filler material. The second layer 15 of flexible plastics material is bonded to a protective outer coat 19 by a further layer 17 of adhesive material.

In operation of the digitiser tablet 1, the second flexible layer 15 is pressed toward the first flexible layer 7 by action of a pen (not shown) pressed against a localised region of the protective layer 19. The material inside the enclosure 10 is thereby compressed causing the conducting particles to pack closer together and to cause the electrical conductivity of the material to be significantly increased in its compressed region. The co-ordinates of the localised region where the conductivity increase takes place are recorded in a known manner by detecting a current between an appropriate pair of external electrodes (not shown), e.g. the pair being in a known X-Y matrix of external electrodes, which electrodes are electrically connected to the conducting coatings 9 and 13 and by delivering appropriate measurement signals to a signal processing device (not shown). The recorded co-ordinates change as the region which is compressed changes. Thus, information written by moving the pen across the surface of the layer 19 is tracked by recording in a signal processor the changes in X-Y co-ordinates of the compressed region caused by writing by the pen. Such information stored by the computer may be sent as a communication message, e.g. by radio communication, to a remote receiver where the information may be retrieved and if appropriate the written information may be reconstructed remotely on an electro-optical display connected to the remote terminal in a known manner.

The construction of the digitiser tablet 1 offers a high resistance against excessive writing loads in a manner which beneficially avoids excessive deflections of the flexible layers 7 or 15 or the conducting coatings carried thereon. The construction also provides toughness in the event of accidental dropping of the digitiser 1 or impact thereon of a hard object without substantially compromising its electrical or optical performance.

## Claims

1. A digitiser structure including a first optically transparent layer carrying an electrically conducting, optically transparent coating (9), a second optically transparent layer carrying an electrically conducting, optically transparent coating (13), a variable resistivity material (in 10) contained between the electrically conducting, optically transparent coatings, and an optically transparent substrate layer bonded to the first optically transparent layer by a bonding layer, wherein the digitiser structure is a multilayer transparent sandwich structure in which the substrate layer (3) supports the other layers of the sandwich; **characterised in that** the substrate layer (3) has a thickness of from 0.5mm to 5mm and is made of glass having on its outer surfaces a skin layer in compression covering a glass core which is in tension, the bonding layer (5) comprises a transparent layer of polymerised adhesive material bonding the first optically transparent layer (7) to the substrate layer (3) and the first (7) and second (15) optically transparent layers are made of a flexible plastics material having a thickness of from 100µm to 300µm.

2. A digitiser structure according to claim 1 wherein the substrate layer has a thickness which is in the range 1mm to 1.5mm.

3. A digitiser structure according to claim 1 or claim 2 which is adapted for use in a manner such that the second optically transparent layer is pressed toward the first optically transparent layer.

4. A digitiser structure according to any one of the preceding claims and wherein the glass substrate layer is glass treated to form a skin layer thereon.

5. A digitiser stucture according to any one of the preceding claims and wherein the compressive skin layer has a thickness of from 20µm to 120µm.

6. A digitiser structure according to any one of the preceding claims and wherein the first and second optically transparent layers are of flexible thermoplastics material.

7. A digitiser structure according to any one of the preceding claims and wherein the transparent conducting coatings are of tin oxide or indium-tin oxide.

8. A digitiser structure according to any one of the preceding claims and which provides an overlay for an electro-optical display screen.

9. A digitiser including a structure according to any one of the preceding claims and including electrodes external to the structure wherein the external electrodes are electrically connected to the transparent conducting coatings to enable electrical current signals to be produced which give a measure of the position on the digitiser where writing by an instrument such as a pen is taking place.

10. A digitiser according to claim 9 and which is operable so that signals recording the measured currents are delivered to a signal processor.

11. A digitiser according to claim 9 or claim 10 and which forms part of a portable terminal for the radio communication of data.

## Patentansprüche

1. Digitalisiererstruktur, die umfasst: eine erste lichtdurchlässige Schicht, die eine elektrisch leitende lichtdurchlässige Beschichtung (9) trägt, eine zweite lichtdurchlässige Schicht, die eine elektrisch leitende lichtdurchlässige Beschichtung (13) trägt, ein zwischen den elektrisch leitenden lichtdurchlässigen Beschichtungen enthaltenes variables spezifisches Widerstandsmaterial (in 10) und eine durch eine Haftschicht an die erste lichtdurchlässige Schicht gebundene lichtdurchlässige Substratschicht, wobei die Digitalisiererstruktur eine mehrschichtige transparente Sandwich-Struktur ist, wobei die Substratschicht (3) die anderen Schichten des Sandwichs unterstützt; **dadurch gekennzeichnet, dass** die Substratschicht (3) über eine Dicke von 0,5 mm bis 5 mm verfügt und aus Glas gemacht ist, auf dessen Außenfläche eine Oberflächenschicht einen Glaskern, der unter Spannung steht, unter Druck bedeckt, die Haftschicht (5) eine transparente Schicht aus polymerisiertem adhäsiven Material umfasst, das die erste lichtdurchlässige Schicht (7) an die Substratschicht (3) bindet, und die erste (7) und die zweite (15) lichtdurchlässige Schicht aus einem flexiblen Kunststoffmaterial gemacht sind, das über eine Dicke von 100 µm bis 300 µm verfügt.

2. Digitalisiererstruktur gemäß Anspruch 1, wobei die Substratschicht über eine Dicke verfügt, die in dem Bereich von 1 mm bis 1,5 mm liegt.

3. Digitalisiererstruktur gemäß Anspruch 1 oder Anspruch 2, die zur Verwendung in einer Art und Weise adaptiert ist, dass die zweite lichtdurchlässige Schicht gegen die erste lichtdurchlässige Schicht gedrückt wird.

4. Digitalisiererstruktur gemäß einem der vorangehenden Ansprüche, wobei die Glassubstratschicht aus einem Glas besteht, das behandelt worden ist, um darauf eine Oberflächenschicht zu bilden.

5. Digitalisiererstruktur gemäß einem der vorangehenden Ansprüche, wobei die zusammendrückende Oberflächenschicht über eine Dicke von 10 µm bis 120 µm verfügt.

6. Digitalisiererstruktur gemäß einem der vorangehenden Ansprüche, wobei die erste und die zweite lichtdurchlässige Schicht aus einem flexiblen thermoplastischen Material bestehen.

7. Digitalisiererstruktur gemäß einem der vorangehenden Ansprüche, wobei die transparenten leitenden Beschichtungen aus Zinnoxid oder Indium-Zinnoxid bestehen.

8. Digitalisiererstruktur gemäß einem der vorangehenden Ansprüche, die einen Überzug für einen elektrooptischen Bildschirm zur Verfügung stellt.

9. Digitalisierer, der eine Struktur gemäß einem der vorangehenden Ansprüche und Elektroden umfasst, die außerhalb der Struktur angeordnet sind, wobei die externen Elektroden elektrisch an die transparenten leitenden Beschichtungen angeschlossen sind, um zu gewährleisten, dass elektrische Stromsignale erzeugt werden, die ein Maß der Position auf dem Digitalisierer zur Verfügung stellen, wo ein Schreiben mit einem Instrument, wie zum Beispiel einem Stift, stattfindet.

10. Digitalisierer gemäß Anspruch 9, der so betreibbar ist, dass Signale entsprechend den gemessenen Strömen an einen Signalprozessor abgeliefert werden.

11. Digitalisierer gemäß Anspruch 9 oder Anspruch 10, der einen Teil eines tragbaren Endgerätes für die Funkkommunikation von Daten bildet.

## Revendications

1. Structure de numériseur comprenant une première couche optiquement transparente portant un revêtement optiquement transparent (9) conducteur de l'électricité, une deuxième couche optiquement transparente portant un revêtement optiquement transparent (13) conducteur de l'électricité, un matériau à résistivité variable (en 10) contenu entre les revêtements optiquement transparents conducteurs de l'électricité, et une couche formant substrat optiquement transparent collée à la première couche optiquement transparente par une couche de liaison, où la structure de numériseur est une structure sandwich transparente multicouche dans laquelle la couche formant substrat (3) supporte les autres couches du sandwich ; **caractérisée en ce que** la couche formant substrat (3) a une épaisseur de 0,5 mm à 5 mm et est constituée de verre ayant sur ses surfaces extérieures une couche de peau en compression recouvrant une âme en verre qui est en tension, la couche de liaison (5) comprend une couche transparente de matériau adhésif polymérisé collant la première couche optiquement transparente (7) à la couche formant substrat (3), et les première (7) et deuxième (15) couches optiquement transparentes sont constituées d'un matériau plastique souple ayant une épaisseur de 100 µm à 300 µm.

2. Structure de numériseur selon la revendication 1, dans laquelle la couche formant substrat a une épaisseur qui est dans l'intervalle de 1 mm à 1,5 mm.

3. Structure de numériseur selon la revendication 1 ou la revendication 2, qui est adaptée pour être utilisée de façon telle que la deuxième couche optiquement transparente soit pressée vers la première couche optiquement transparente.

4. Structure de numériseur selon l'une quelconque des revendications précédentes, et dans laquelle la couche formant substrat en verre est du verre traité de façon qu'une couche de peau soit formée sur lui.

5. Structure de numériseur selon l'une quelconque des revendications précédentes, et dans laquelle la couche de peau compressive a une épaisseur de 20 µm à 120 µm.

6. Structure de numériseur selon l'une quelconque des revendications précédentes, et dans laquelle les première et deuxième couches optiquement transparentes sont en matériau thermoplastique souple.

7. Structure de numériseur selon l'une quelconque des revendications précédentes, et dans laquelle les revêtements conducteurs transparents sont en oxyde d'étain et en oxyde d'indium-étain.

8. Structure de numériseur selon l'une quelconque des revendications précédentes, et qui constitue un masque pour un écran d'affichage électro-optique.

9. Numériseur comprenant une structure selon l'une quelconque des revendications précédentes et comprenant des électrodes externes à la structure, les électrodes externes étant connectées électriquement aux revêtements conducteurs transparents pour permettre la production de signaux de courant électrique qui fournissent une mesure de la position sur le numériseur à laquelle a lieu une opération d'écriture au moyen d'un instrument tel qu'un stylo.

10. Numériseur selon la revendication 9, et qui peut être utilisé de façon que les signaux enregistrant les courants mesurés soient délivrés à un processeur de signaux.

11. Numériseur selon la revendication 9 ou la revendication 10, et qui forme une partie d'un terminal portable pour la communication radio de données.
